Europäisches Patentamt

European Patent Office

Office européen des brevets

(19)

(11) Veröffentlichungsnummer: **0 043 501**
**B1**

(12) **EUROPÄISCHE PATENTSCHRIFT**

(45) Veröffentlichungstag der Patentschrift:
**30.11.83**

(21) Anmeldenummer: **81104881.8**

(22) Anmeldetag: **24.06.81**

(51) Int. Cl.³: **C 08 L 83/04,** C 08 G 77/04,
C 08 K 5/01 // C09D3/82

(54) Unter Wasserausschluss lagerfähige plastische Organopolysiloxan-Formmassen.

(30) Priorität: **04.07.80 DE 3025376**

(43) Veröffentlichungstag der Anmeldung:
**13.01.82 Patentblatt 82/2**

(45) Bekanntmachung des Hinweises auf die Patenterteilung:
**30.11.83 Patentblatt 83/48**

(84) Benannte Vertragsstaaten:
**BE DE FR GB IT NL**

(56) Entgegenhaltungen:
**EP - A - 0 022 976**
**DE - C - 1 247 646**
**DE - C - 1 258 087**
**GB - A - 2 041 955**
**US - A - 3 701 753**
**US - A - 3 957 714**

**Patents Abstracts of Japan Band 3, Nr. 142, 24 November 1979 Selte 125C65**

*Die Akte enthält technische Angaben, die nach dem Eingang der Anmeldung eingereicht wurden und die nicht in dieser Patentschrift enthalten sind.*

(73) Patentinhaber: **BAYER AG, Zentralbereich Patente, Marken und Lizenzen, D-5090 Leverkusen 1, Bayerwerk (DE)**

(72) Erfinder: **Sattlegger, Hans, Dr., Auf dem Heidchen 9, D-5068 Odenthal (DE)**
Erfinder: **Schnurrbusch, Karl, Dr., Kurt-Schumacher-Ring 154, D-5090 Leverkusen 1 (DE)**
Erfinder: **Boll, Manfred, Füllsichel 7, D-5093 Burscheid (DE)**
Erfinder: **Friemann, Hans, Dr., Sileslusstrasse 82, D-5000 Koeln 80 (DE)**

## Unter Wasserausschluß lagerfähige plastische Organopolysiloxan-Formmassen

Die Erfindung betrifft platisch verformbare Gemische von Organopolysiloxanen mit bestimmten Vernetzungsmitteln, die bei Temperaturen unterhalb 50°C in Anwesenheit von Wasser oder Wasserdampf in einen gummielastischen Zustand übergehen und die eine gute Überstreichbarkeit besitzen.

Derartige Gemische — auch RTV-Einkomponenten-Massen genannt — finden vornehmlich Verwendung als Fugen- und Dichtungsmassen im Bauwesen, bei sanitären Anlagen und im Aquarienbau. Sie enthalten alle als Grundbestandteil ein gegebenenfalls mit Füllstoff vermischtes $\alpha,\omega$-Dihydroxypolydiorganosiloxan. Mischt man dies mit einer Siliciumverbindung, die mehr als zwei reaktive Gruppen enthält, welche sowohl mit Silanolgruppen als auch mit Wasser reagieren können, und schließt man dabei den Zutritt jeglicher Feuchtigkeit aus, so ergeben sich lagerbeständige Reaktionsgemische, die bei Zutritt atmosphärischer Luft durch deren Wasserdampfgehalt in ein elastomeres Vernetzungsprodukt umgewandlet werden. Derartige RTV-Einkomponentensysteme sind an sich seit langem bekannt. Sehr gut bewährt haben sich sog. »neutrale« Fugendichtungsmassen (vgl. z. B. DE-PS 1 247 646, DE-PS 1 258 087), bei denen als Vernetzungsmittel Carbonsäureamido-alkylalkoxysilane verwendet werden. Für zahlreiche Anwendungsgebiete, insbesondere bei Fensterabdichtungen und Fugen zwischen Betonwänden, aber auch bei zahlreichen anderen Einsatzgebieten war die mangelnde Überstreichbarkeit bzw. eine ungenügende Lackhaftung von Nachteil.

Es wurden zahlreiche Anstrengungen und Versuche unternommen, um die Überstreichbarkeit von Einkomponentenmassen bzw. die Lackhaftung zu verbessern. So hat man z. B. versucht, die Dichtungsmassen durch Zusätze wie nadelförmiges Calciumcarbonat oder bestimmte Lösungsmittel überstreichbar zu machen. Die resultierenden Produkte weisen jedoch stark veränderte mechanische Eigenschaften auf (hoher Modul, niedrige Bruchdehnung, hohe Shore-A-Härte, große Volumenänderung nach der Aushärtung), so daß ihre Qualität den an sie gestellten Anforderungen nicht mehr genügen kann.

Es wurde nun gefunden, daß sich die genannten Nachteile ohne Einbußen der anderen vorteilhaften Eigenschaften vermeiden lassen, wenn Organopolysiloxanmassen bestimmte Zusätze zugegeben werden.

Gegenstand der vorliegenden Erfindung sind somit unter Ausschluß von Wasser lagerfähige plastische Organopolysiloxan-Formmassen, die sich unter Einwirkung von Wasser oder atmosphärischer Luft bereits bei Raumtemperatur in gummielastische Formkörper oder Überzüge umwandeln, hergestellt durch Mischen von $\alpha,\omega$-Dihydroxypolydiorganosiloxanen mit als Vernetzungsmittel dienenden Carbonsäureamido-alkyl-alkoxy-Silicium-Verbindungen und komplexen Titansäureestern und gegebenenfalls mit Füllstoffen, Pigmenten und mit bekanntermaßen die Vernetzung beschleunigenden Schwermetallsalzen, die dadurch gekannzeichnet sind, daß das Gemisch 0,2—15 Gew.-% — bezogen auf die Gesamtmischung — verzweigte und/oder cyclische Paraffin-Kohlenwasserstoffe mit 6 bis 24 C-Atomen enthält.

Überraschenderweise hat sich herausgestellt, daß durch solche Zusätze in den genannten Einkomponentensystemen eine gute Überstreichbarkeit bei guter Lackhaftung und gutem Oberflächenverlauf erzielt werden kann.

Die Mengenverhältnisse der Mischungskomponenten sind analog denen der bekannten Massen. Bevorzugt ist ein Gemisch, das auf 100 Gewichtsteile $\alpha,\omega$-Dihydroxypolydiorganosiloxan von 1000 bis 500 000 m Pas, insbesondere 10 000 bis 60 000 m Pas Viskosität bei 20°C, 3—20 Teilen eines komplexen Titansäureesters, 10 bis 150 Gewichtsteile eines Füllstoffes, 3 bis 20 Gewichtsteile des Vernetzungsmittels und gegebenenfalls 0,1 bis 3,0 einer Schwermetallverbindung als Katalysator enthält. Als Vernetzer kommen Carbonsäureamido-alkyl-alkoxy-Silicium-Verbindungen in Frage wie z. B.

Di-N-methylbenzamido-methyl-ethoxy-silan
Di-N-methylbenzamido-methyl-methoxy-silan
Di-N-methylpropylamido-methyl-ethoxy-silan
Mono-N-methylpropylamido-methyl-diethoxy-silan
Di-N-methylpropylamido-methyl-methoxysilan
Di-N-methylcaprolactam-methyl-ethoxy-silan
Di-N-methylcaprolactam-methyl-methoxy-silan.

Als Füllstoffe werden verstärkend wirkende, wie kolloiddisperse Kieselsäuren, bevorzugt, doch lassen sich dazu auch gering verstärkende verwenden, wie Quarzmehl, Diatomeenerde oder Zinkoxid und Kreide.

Als erfindungsgemäße Zusatzstoffe eignen sich: verzweigte oder cyclische Paraffin-Kohlenwasserstoffe mit 6 bis 24 C-Atomen, wie z. B. Isohexan, Isooktan, Isohexadecan, Isododecan, Isooktadecan/Cyclohexan.

Die erfindungsgemäßen Einkomponenten-Systeme eignen sich prinzipiell für alle Verwendungszwecke wo eine entsprechende Überstreichbarkeit gewünscht wird. Besonders bevorzugt werden derartige Systeme bei Verfugungen an Fenstern, Fassaden und im Do-it-your-self-Sektor verwendet. Die Überstreichbarkeit bzw. Überlackierbarkeit ist bei allen geeigneten Lacken für die genannten Anwendungsgebiete gegeben, besonders bei handelsüblichen Lacken auf Alkydharz-Basis (Vorlacke und Decklacke), bei Dispersionsfarben auf Basis von Mischungen, je nach Verwendungszweck, aus Acrylat, Styrol, Polyvinylacetat und Polyvinylpropionaten.

Dabei ist der Vorlack je nach Schichtdicke des Dichtstoffes nach 1—3 Tagen aufzubringen, und danach kann die Lackierung in üblicher Weise erfolgen.

Die Herstellung der erfindungsgemäßen Formmassen aus ihren Mischungskomponenten erfolgt in bekannter Weise, wobei man gewöhnlich zunächst die weitgehend wasserfreien, nicht vernetzend wirkenden Komponenten zusammenmischt, danach das Vernetzungsmittel beimengt und schließlich das Gesamtgemisch bei Raumtemperatur entgast.

Der Gegenstand der vorliegenden Erfindung soll anhand der folgenden Beispiele noch näher erläutert werden.

## Beispiel 1
### (Vergleich)

Es wird eine Mischung aus 66,2 Gewichtsteilen $\alpha,\omega$-Dihydroxypolydimethylsiloxan von 50 000 m Pas und 4,5 Gew.-Teilen Di-i-butoxy-titan-diacetessigesterchelat vorgelegt. Dazu werden bei Raumtemperatur 20,0 Gew.-Teile Kreide, 1,0 Gew.-Teile Titandioxid und 3,5 Gew.-Teile einer fein dispersen, durch Flammenhydrolyse gewonnenen Kieselsäure (130 m$^2$/g BET) bis zur Homogenität (ca. 20—30 Min.) gerührt und anschließend ca. 5 Min. evakuiert. Dann folgt der Zusatz von 0,7 Gew.-Teilen einer Organozinnverbindung. Rührzeit ca. 5 Min. Zum Schluß werden 4,0 Gew.-Teile Di-N-methylbenzamido-methyl-ethoxy-silan untergerührt und ca. 15 Min. evakuiert.

Die Masse wird in Kartuschen abgefüllt und verschlossen. Lagerfähigkeit ohne Feuchtigkeitszutritt mindestens 1/2 Jahr, ohne daß die Eigenschaften bei einer späteren Anwendung beeinträchtigt werden.

Die mechanischen Eigenschaften (sowohl vor als auch nach der Lagerung): E-Modul 100% — ca. 0,3 N/mm$^2$, Reißfestigkeit — ca. 0,7 N/mm$^2$, Bruchdehnung — ca. 550%, Shore-A-Härte — ca. 22, Dichte — ca. 1,27 g/cm$^3$.

## Beispiel 2

Es wird eine Mischung aus 45,3 Gew.-Teilen $\alpha,\omega$-Dihydroxy-polydimethylsiloxan von 50 000 m Pas und 4,5 Gew.-Teilen Di-i-butoxy-titan-diacetessigesterchelat vorgelegt. Dazu werden bei Raumtemperatur 40,0 Gew.-Teile Kreide, 1,0 Gew.-Teile Titandioxid und 4,5 Gew.-Teile einer fein dispersen, durch Flammenhydrolyse gewonnenen Kieselsäure bis zur Homogenität (ca. 20—30 Min.) gerührt und ca. 5 Min. evakuiert. Dann folgt der Zusatz von 0,7 Gew.-Teilen einer Organozinnverbindung, gelöst in 1,0 Gew.-Teilen eines Isooktadecan mit Rührzeit von ca. 5 Min. Zum Schluß werden 4,0 Gew.-Teile Di-N-methyl-benzamido-methyl-ethoxy-silan untergerührt und ca. 15 Min. evakuiert.

Die Masse wird in Kartuschen abgefüllt und verschlossen. Lagerfähigkeit ohne Feuchtigkeitszutritt mindestens 1/2 Jahr, ohne daß die Eigenschaften bei einer späteren Anwendung beeinträchtigt werden.

Die mechanischen Eigenschaften (sowohl vor als auch nach der Lagerung): E-Modul 100% — ca. 0,5 N/mm$^2$, Reißfestigkeit — ca. 0,7 N/mm$^2$, Bruchdehnung — ca. 330%, Shore-A-Härte — ca. 40, Dichte — ca. 1,4 g/cm$^3$.

## Beispiel 3

Es wird eine Mischung aus 56,3 Gew.-Teilen $\alpha,\omega$-Dihydroxy-polydimethylsiloxan von 50 000 m Pas und 4,5 Gew.-Teilen Di-i-butoxy-titan-diacetessigesterchelat vorgelegt. Dazu werden bei Raumtemperatur 25 Gew.-Teile Kreide, 1,0 Gew.-Teile Titandioxid und 8,0 Gew.-Teile einer fein dispersen, durch Flammenhydrolyse gewonnenen Kieselsäure bis zur Homogenität (ca. 20—30 Min.) gerührt und ca. 5 Min. evakuiert. Dann folgt der Zusatz von 0,7 Gew.-Teilen einer Organozinnverbindung, gelöst in 5,0 Gew.-Teilen Isododecan, Rührzeit ca. 5 Min. Zum Schluß werden 4,0 Gew.-Teile Di-N-methylbenzamido-methyl-ethoxy-silan untergerührt und ca. 15 Min. evakuiert. Die Masse wird in Kartuschen abgefüllt und verschlossen. Lagerfähigkeit ohne Feuchtigkeitszutritt mindestens 1/2 Jahr, ohne daß die Eigenschaften bei einer späteren Anwendung beeinträchtigt werden.

Die mechanischen Eigenschaften (sowohl vor als auchd nach der Lagerung): E-Modul 100% — ca. 0,4 N/mm$^2$, Reißfestigkeit — ca. 1,0 N/mm$^2$, Bruchdehnung — ca. 530%, Shore-A-Härte — ca. 40, Dichte — ca. 1,22 g/cm$^3$.

0 043 501

## Beispiel 4

Es wird eine Mischung aus 44,3 Gew.-Teilen $\alpha,\omega$-Dihydroxy-polydimethylsiloxan von 50 000 m Pas und 4,5 Gew.-Teilen Di-i-butoxy-titan-diacetessigesterchelat vorgelegt. Dazu werden bei Raumtemperatur 40,0 Gew.-Teile Kreide, 1,0 Gew.-Teile Titandioxid und 4,5 Gew.-Teile einer fein dispersen, durch Flammhydrolyse gewonnenen Kieselsäure bis zur Homogenität (ca. 20—30 Min.) gerührt und ca. 5 Min. evakuiert. Dann folgt der Zusatz von 0,7 Gew.-Teilen einer Organozinnverbindung, gelöst in 1,0 Gew.-Teile eines Isododecans. Rührzeit ca. 5 Min. Zum Schluß werden 4,0 Gew.-Teile Di-N-methylbenzamido-methyl-ethoxy-silan untergerührt und ca. 15 Min. evakuiert.

Die Masse wird in Kartuschen abgefüllt und verschlossen. Lagerfähigkeit ohne Feuchtigkeitszutritt mindestens 1/2 Jahr, ohne daß die Eigenschaften bei einer späteren Anwendung beeinträchtigt werden.

Die mechanischen Eigenschaften (sowohl vor als auch nach der Lagerung): E-Modul 100% — ca. 0,4 N/mm², Reißfestigkeit — ca. 0,6 N/mm², Bruchdehnung — ca. 330%, Shore-A-Härte — ca. 40, Dichte — ca. 1,4 g/cm³.

## Beispiel 5

Es wird eine Mischung aus 44,3 Gew.-Teilen $\alpha,\omega$-Dihydroxy-polydimethylsiloxan und 4,5 Gew.-Teilen Di-i-butoxy-titan-diacetessigesterchelat vorgelegt. Dazu werden bei Raumtemperatur 40,0 Gew.-Teile Kreide, 1,0 Gew.-Teile Titandioxid und 4,5 Gew.-Teile einer fein dispersen, durch Flammenhydrolyse gewonnenen Kieselsäure bis zur Homogenität (ca. 20—30 Min.) gerührt und ca. 5 Min. evakuiert. Dann folgt der Zusatz von 0,7 Gew.-Teilen einer Organozinnverbindung, gelöst in 1,0 Gew.-Teile eines Isooctans. Rührzeit ca. 5 Min. Zum Schluß werden 4,0 Gew.-Teile Di-N-methylbenzamido-methyl-ethoxy-silan untergerührt und ca. 15 Min. evakuiert.

Die Masse wird in Kartuschen abgefüllt und verschlossen. Lagerfähigkeit ohne Feuchtigkeitszutritt mindestens 1/2 Jahr, ohne daß die Eigenschaften bei einer späteren Anwendung beeinträchtigt werden.

Die mechanischen Eigenschaften (sowohl vor als auch nach der Lagerung): E-Modul 100% — ca. 0,4 N/mm², Reißfestigkeit — ca. 0,6 N/mm², Bruchdehnung — ca. 330%, Shore-A-Härte — ca. 40, Dichte — ca. 1,4 g/cm³.

Tabelle I

Vergleich chemisch neutraler Systeme bezüglich Lackhaftung und Oberflächen-Verlauf

| | Lackhaftung (Boeing-Test gemäß ASTM D 3359-70) | | Oberflächen-Verlauf | |
|---|---|---|---|---|
| | Alkydharzbasis*) | Dispersionsbasis | | |
| Beispiel 1 | keine | keine | gut | gut |
| Beispiel 2 | gut | gut | gut | gut |
| Beispiel 3 | gut | gut | gut | gut |
| Beispiel 4 | gut | befriedigend | gut | gut |
| Beispiel 5 | befriedigend | befriedigend | gut | gut |
| Handelsprodukt, enthaltend nadelförmiges Calciumcarbonat | keine | — | gut | — |

*) Aufgetragen wurde ein Lack auf Alkydharzbasis nach der vor Beispiel 1 angegebenen Verfahrensweise.

**0 043 501**

Tabelle II

Vergleich mechanischer Eigenschaften

| | E-Modul DIN 53 504 | Shore A DIN 53 505 | Gewichtsverlust % 23°C | 70°C | Dichte g/cm$^3$ |
|---|---|---|---|---|---|
| Beispiel 1 ca. | 0,3 | 22 | 1,0 | 6,8 | 1,27 |
| Beispiel 2 ca. | 0,5 | 40 | 1,0 | 8,7 | 1,39 |
| Beispiel 3 ca. | 0,4 | 40 | 3,8 | 9,4 | 1,22 |
| Beispiel 4 ca. | 0,4 | 40 | 1,0 | 8,0 | 1,40 |
| Beispiel 5 ca. | 0,4 | 40 | 1,0 | 7,8 | 1,40 |
| Handelsprodukt, enthaltend nadelförmiges Calciumcarbonat ca. | 0,9 | 65 | 22,0 | 24,0 | 1,23 |

**Patentansprüche**

1. Unter Ausschluß von Wasser lagerfähige plastische Organopolysiloxan-Formmassen, die sich unter Einwirkung von Wasser oder atmosphärischer Luft in gummielastische Formkörper oder Überzüge umwandeln, erhältlich durch Mischen von $\alpha,\omega$-Dihydroxypolydiorganosiloxanen mit als Vernetzungsmittel dienenden Carbonsäureamido-alkyl-alkoxy-Silicium-Verbindungen und komplexen Titansäureestern und gegebenenfalls mit Füllstoffen, Pigmenten und mit bekanntermaßen die Vernetzung beschleunigenden Schwermetallsalzen, dadurch gekennzeichnet, daß das Gemisch etwa 0,2 bis 15 Gew.-% — bezogen auf die Gesamtmischung — verzweigte und/oder cyclische Paraffinkohlenwasserstoffe mit 6 bis 24 C-Atomen enthält.

2. Organopolysiloxan-Formmassen gemäß Anspruch 1, dadurch gekennzeichnet, daß sie als Paraffinkohlenwasserstoffe Cyclohexan, Isohexan, Isooctan, Isohexadecan, Isodecan und/oder Isooctadecan enthalten.

3. Organopolysiloxan-Formmassen gemäß Anspruch 1 oder 2, dadurch gekennzeichnet, daß als Vernetzungsmittel Di-N-methylbenzamido-methyl-ethoxy-silan eingesetzt wird.

**Claims**

1. Plastic organopolysiloxane moulding compositions which can be stored in the absence of water and which change into elastomeric mouldings or coatings under the effect of water or atmospheric air, obtainable by mixing $\alpha,\omega$-dihydroxy polydiorgano siloxanes with carboxylic acid amidoalkyl alkoxy silicon compounds acting as crosslinking agents and complex titanic acid esters and optionally with fillers, pigments and heavy metal salts which are known to accelerate the crosslinkig reaction, characterised in that the mixture contains about 0,2 to 15% by weight, based on the mixture as a whole, of branched and/or cyclic paraffin hydrocarbons containing 6 to 24 carbon atoms.

2. Organopolysiloxane moulding compositions according to Claim 1, characterised in that they contain as paraffin hydrocarbons, cyclohexane, isohexane, isooctane, isohexadecane, isododecane and/or isooctadecane.

3. Organopolysiloxane moulding compositions according to Claim 1 or 2, characterised in that di-N-methyl benzamidomethyl ethoxy silane is used as the crosslinking agent.

**Revendications**

1. Matières à mouler à base d'organopolysiloxannes, plastiques, stables au stockage à l'abri de l'eau, qui se transforment sous l'action de l'eau ou de l'air atmosphérique en matières moulées ou revêtements élastiques caoutchouteux, obtenues par mélange d'$\alpha,\omega$-dihydroxypolydiorganopolysiloxannes avec, comme agents réticulants, des composés carboxamido-alkyl-alcoxy-silicium et des esters complexes d'acide titanique et éventuellement avec des charges, des pigments et des sels de métaux lourds connus pour accélérer la réticulation, caractérisées en ce que le mélange contient 0,2 à 15% en poids — par rapport au mélange total — d'hydrocarbures paraffiniques ramifiés et/ou cycliques en $C_6-C_{24}$.

5

2. Matières à mouler à base d'organopolysiloxannes selon la revendication 1, caractérisées en ce qu'elles contiennent comme hydrocarbures paraffiniques du cyclohexane, de l'isohexane, de l'isooctane, de l'isohexadécane, de l'isododécane et/ou de l'isooctadécane.

3. Matières à mouler à base d'organopolysiloxannes seion la revendication 1 ou 2, caractérisées en ce que l'on utilise comme agent réticulant le di-N-méthylbenzamido-méthyl-éthoxy-silane.